# EUROPEAN PATENT SPECIFICATION

(11) **EP 2 976 345 B1**
(45) Date of publication and mention of the grant of the patent: **09.06.2021**
(21) Application number: 14769904.5
(22) Date of filing: 18.03.2014
(51) Int. Cl.: C07F 9/08, D06F 31/00, D06F 39/08, D06F 27/00, B01D 63/06, B01D 29/66, B01D 61/02, B01D 61/14, B01D 65/02, B01D 65/08, B01D 71/02, B01D 61/58, C02F 1/02, C02F 1/32, C02F 1/44, C02F 9/00, D06F 39/00, D06F 39/10, C02F 1/28, C02F 1/66

(54) **WATER TREATMENT SYSTEM**
WASSERBEHANDLUNGSSYSTEM
SYSTÈME DE TRAITEMENT DE L'EAU

(30) Priority: 20.03.2013 US 201361803566 P
(43) Date of publication of application: 27.01.2016
(73) Proprietor: Hydrasyst IP Pty Ltd., Ashmore, QLD 4214 (AU)
(72) Inventor: WOLFF, Kyle Anthony, Ashmore, QLD 4214 (AU)
(74) Representative: HGF
(86) International application number: PCT/AU2014/000288
(87) International publication number: WO 2014/146165

(56) References cited:
- WO-A1-2011/140602
- FR-A3- 2 672 043
- US-A- 4 211 650
- US-A- 4 236 393
- US-A- 5 707 584
- US-A- 5 868 937
- US-A1- 2003 110 815
- US-A1- 2012 233 785
- US-B1- 6 195 825
- US-B1- 6 474 111

## Description

### FIELD OF THE INVENTION

This invention relates in general to a water treatment system and process for a continuous batch or "tunnel" washing machines. In particular, the present invention relates to a system and process for the reclamation and reuse of waste-water effluent, energy and chemical recovery from a continuous batch or "tunnel" washing machines in laundry operations.

### BACKGROUND OF THE INVENTION

It should be noted that reference to the prior art herein is not to be taken as an acknowledgement that such prior art constitutes common general knowledge in the art.

Certain batch laundry systems are well known in the art and are utilized extensively in commercial laundry applications and in the treatment or washing of textile piece goods. Typically known batch laundry machines include a longitudinally elongated housing which encloses a plurality of chambers which are utilized for prewash, rinse, main wash, boiling or cold rinsing, and other forms of treatment. Generally water is circulated through the machines and recycled from the outlet end back to the inlet end. Drive means are generally provided for oscillating the various chambers to maximize the cleansing action.

Well known batch laundry systems exist which utilize a drum or cylinder which includes a transfer chute which acts to retain the contents of the cylinder during oscillation and serves to transfer the contents to an adjacent cylinder upon unidirectional rotation of that cylinder. Thus, the contents of such a system enter the system at one end and proceed through the various cylinders to exit.

Normally, water usage typically in tunnel washers results in its contamination and the resulting waste water is no longer useful for most applications. Therefore, waters from domestic and industrial users have been the subject of treatment and purification for a long time in order to remove toxic contaminants, bad odors and suspended solids. The recycling, reuse or reticulation of water is increasingly important in making economical use of clean water supplies and in minimising pollution.

Water recycling is a common application in industrial laundries and in particular in the tunnel washers. The water from batch laundry systems generally carries contaminants such as dirt, mud, sand, fibre, detergents, phosphates, salts, organic chemicals and organic materials such as pathogens, bacteria, and virus from human or animal contact.

Recycling water presents particular problems. One problem is obtaining maximum recycle rates or rates which are high enough to justify the cost and/or space and energy used by the recycling apparatus. Another problem is the variety and levels of materials and contaminants that need to be removed from water before it can be reused or recycled. Combined with the first problem, this presents a significant challenge. Other problems relate to water recycling systems often needing to be on-site where maintenance staff are often not on hand to provide maintenance of the system.

One approach to recycling water in general, but grey water specifically uses a ceramic membrane, such as a membrane made of a Al₂O₃ or silicon carbide ceramic to filter-water. These types of filter can remove a wide range of contaminant. However, apparatuses taking this approach often require a large footprint. Also, they can suffer [imitations in flux per square metre of membrane, particularly over extended periods of use. Other limitations arise in maintaining consistent flow through the ceramic membrane, particularly in grey water recycling and maintenance or lifetime of the ceramic membranes. In practical applications, this can result in limited recycling efficiency and yield. Other limitations relate to energy consumption due to the mechanical structure of the membrane.

Another issue which is becoming more prevalent with today's environmental issues is the use of chemicals in the batch or tunnel laundry systems. The uses of chemicals are essential for washing and are added at every stage of the washing process. These chemicals include alkalis which increase the pH to facilitate the break-down of proteins and acids such as phosphoric and citric are used to neutralise the alkaline pH. Surfactants are also used and range from non-tonic, anionic and cationic surfactants. The non- ionic and anionic surfactants increase the soil removal capabilities and cationic surfactants are applied as fabric softeners. Builders such as phosphate and chelating agents inactivate hardness minerals and thereby increase the cleaning efficiency of the surfactants. Finally, bleaching chemicals such as hypochlorite, peroxides perborates and percarbonates are also used in tunnel laundry and any commercial laundry facilities.

It is therefore important to reduce the amount of usage of these chemicals and provide a means of reclaiming the chemicals from the waste water to be reused in the washing process.

Clearly it would be advantageous if a water treatment system could be devised that helped to at least ameliorate some of the shortcomings described above. In particular, it would be beneficial for a water treatment system to improve on these deficiencies in water treatment techniques, or to at least provide a useful alternative.

WO 2011/140602 discloses a water treatment apparatus, including a ceramic filter; and a flow apparatus operable to pass water through the ceramic filter in a forward direction so as to filter the water, the flow apparatus also operable to pass water through the ceramic filter in a reverse direction so as to remove material from the ceramic filter, whereby material having been deposited by filtration of the water is removed.

US 2003/0110815 discloses a tunnel washer apparatus that includes a "ratio metric" water reuse system that features four water loops. The water loops include fresh water, reuse water, rinse water, and treated water. The tunnel washer has five stages that include wet out, first wash zone, second wash zone, main rinse zone, and fine rinse/finishing zone. The water loops are designed to minimize the consumption of fresh water by blending the appropriate quantity of the four types of water. The blending formulation may vary based on the type of goods (for example linen) in the tunnel stage and the dynamic quality of each type of water.

### SUMMARY OF THE INVENTION

In accordance with a first aspect, the present invention provides a water treatment system as defined in claim 1 of the appended claims.

The temperature controller is configured to control the temperature of the mixture of water and chemicals between 40 degrees Celsius and 90 degrees Celsius.

Preferably, the flow apparatus may pass water through the filter at a pressure between 1 and 3 bar and at a rate at the filter surface between 1 and 3 metres per second. The flow apparatus may include forward-flow apparatus operable to provide the forward-flow and reverse-flow apparatus operable to provide the reverse flow. The reverse-flow apparatus may include a backwash pump and tank operable to receive filtered water from the filter to provide water to the reverse-flow apparatus.

Preferably, the reverse-flow apparatus may include: a back-wash pump and tank which is operable to be pressurised; pressure apparatus operable to pressurise the tank; and a backwash conduit connected to the filter such that when the backwash tank is pressurised, water from the backwash tank is provided to the filter in the reverse direction.

Preferably, the filter may be adapted to provide both microfiltration and ultrafiltration. The microfiltration or the ultrafiltration filters may be used as pre-filters for any one of or combination of: (i) a nanofiltration filter; or (ii) a reverse osmosis filter.

Preferably the system may further include a preliminary filter to filter water prior to it being passed through the membrane filter, the preliminary filter comprising a vibrating membrane.

Preferably, the system may further include a carbon filter downstream of the membrane filter.

Preferably, the system may further include a UV treatment apparatus downstream of the membrane filter to treat water with Ultra Violet light to disinfect the water.

Preferably, the system may further include a pH adjustment apparatus operable to adjust the pH level of filtered water. The pH level may be maintained between 6 and 8.

Preferably, the continuous batch laundry system may be a continuous batch tunnel washer.

In accordance with a further aspect, the present invention provides a process to treat a mixture of water and chemicals as defined in claim 11 of the appended claims.

Preferably, the process may be controlled by a computer comprising: a code memory operable to store processor executable code; a processor operable to execute code stored in the code memory; and a data memory operable to store data, wherein the code memory stores the code which when executed causes the processor to control the system of any one of the features of the first aspect.

### BRIEF DESCRIPTION OF THE DRAWINGS

The present invention will be understood more fully from the detailed description given hereinafter and from the accompanying drawings of the preferred embodiment of the present invention, which, however, should not be taken to be limitative to the invention, but are for explanation and understanding only.
Figure 1 shows a schematic diagram of a water treatment system for a tunnel washer in accordance with an embodiment of the present invention;
Figure 2 shows a schematic diagram of the water recycling apparatus of Figure 1 ;
Figure 3 illustrates a tunnel washer of Figure 1 ; and
Figure 4 is a block diagram of a control system to control operation of the water recycling apparatus of Figure 2.

### DETAILED DESCRIPTION OF THE PREFERRED EMBODIMENTS

The following description, given by way of example only, is described in order to provide a more precise understanding of the subject matter of a preferred embodiment or embodiments.

Embodiments of the invention relate to a water treatment system and method. The water treatment system is used for the treatment of water used a continuous batch laundry system, where high throughput of water is required. Embodiments are not, however, limited to such use.

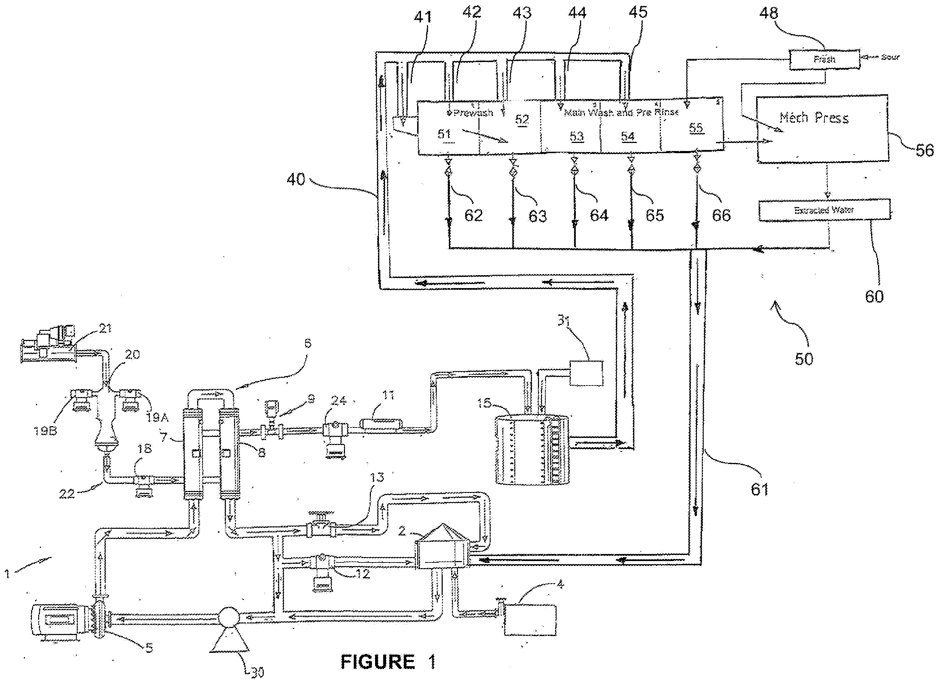

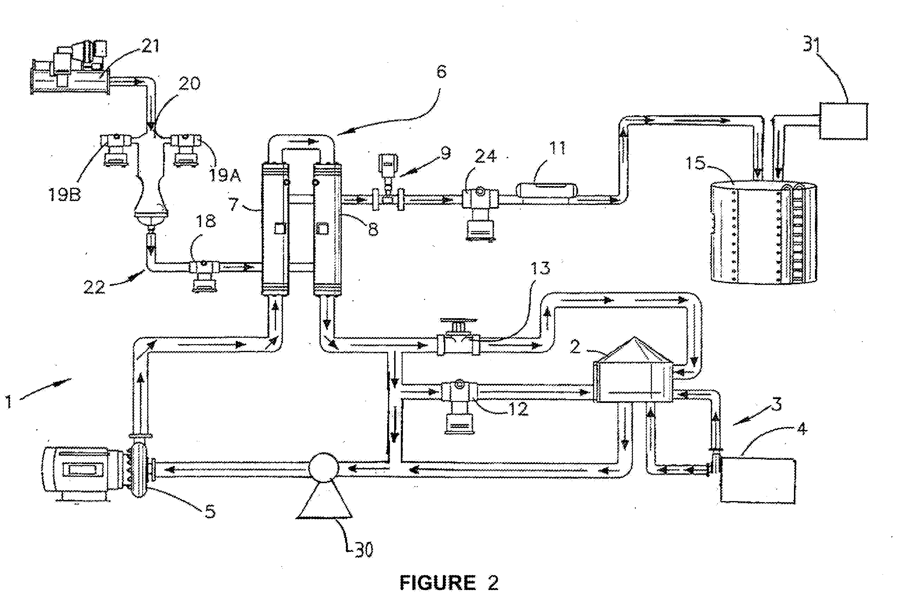

With reference to figure 1 , there is depicted a schematic diagram of the water treatment system which includes the continuous batch laundry system 50 and the water treatment apparatus 1 of the present invention. As can be seen, system 50 includes a plurality of longitudinally aligned modules 51, 52, 53, 54 and 55 each of which houses a rotatably supported drum. Also shown in Figures 1 and 2 is the water treatment and recycling apparatus 1 which includes a raw water tank 2 and a permeate tank 15.

A temperature controller 4, for example in the form of a Direct Steam Injection (DSI) device and pump may draw off and returns water from the raw water tank 2 to maintain the water at a temperature above 40 degrees. The pump may be a centrifugal pump able to draw water though the direct steam injection device and back into the raw water tank 2. Suitable DSI or other heating devices and pumps can be used for this function, including thermostatic mixing valves. As a further arrangement the temperature controller 4 may also control the temperature of the fresh or mains water using either a direct steam injection device or a thermostatic mixing valve.

The temperature may be maintained by the temperature controller 4 at 60 degrees Celsius which is 20 degrees above the lowest temperature of water used by the commercial laundry for which water is recycled. This temperature provides improved efficiency of ceramic membranes 6 used in the apparatus but involves minimal energy wastage as water is heated only 20 degrees above that required by the commercial laundry for its lowest temperature operation cycle. The improved efficiency of the ceramic membrane 6 results in improved filtration and a higher percentage of the raw water being recycled. Alternative embodiments may use alternatives to direct steam injection or thermostatic mixing valves for temperature control.

The raw water tank 2 feeds a booster pump 5 via a transfer pump 30. The booster pump 5 supplies water at pressure to a ceramic membrane filter 6 formed by two or more membrane vessels 7 and 8 connected in series. The raw water tank 2 receives the raw water drained from the continuous batch laundry system 50 via pipes 61, 62, 63, 64, 65, 66 and also the extracted water 60 from the mechanical press 56. The raw water drained from the continuous batch laundry system 50 includes chemicals such as alkalis, acids used to neutralise the alkaline pH, surfactants, builders such as phosphate and chelating agents, and bleaching chemicals such as hypochlorite, peroxides perborates and percarbonates.

In this embodiment the membranes used in the ceramic hollow fibre membrane filter 6 is selected to have average membrane apertures of 0.1 micrometres.

The ceramic hollow fibre membranes range from 20 nanometers (nm) through to 1400 nm, depending on feed water quality. Ceramic materials are generally very stable chemically, thermally and mechanically, and in addition are frequently bio inert and are ideally used in such applications as water and wastewater processing.

In a further example the ceramic membrane filter may be used in conjunction with a media filter. A media filter is taken to mean any type of filter that uses some form of media such as a bed of sand, crushed granite or other material to filter water for use in the continuous batch laundry system 50.

The membrane filter is adapted to provide both microfiltration and ultrafiltration. Microfiltration is a membrane technical filtration process which removes contaminants from a fluid (liquid & gas) by passage through a microporous membrane. A typical microfiltration membrane pore size range is 0.1 to 10 micrometres (µm). Ultrafiltration is typically a variety of membrane filtration in which hydrostatic pressure forces a liquid against a semipermeable membrane. Suspended solids and solutes of high molecular weight are retained, while water and low molecular weight solutes pass through the membrane.

The microfiltration or the ultrafiltration fitters may be used as pre-filters for any one of or combination of: (i) a nanofiltration filter; or (ii) a reverse osmosis filter.

Nanofiltration is a relatively recent membrane filtration process used most often with low total dissolved solids water such as the water from the continuous batch laundry system 50, with the purpose of softening (polyvalent cation removal) and removal of disinfection by-product precursors such as natural organic matter and synthetic organic matter. Reverse osmosis is a membrane-technology filtration method that removes many types of large molecules and tons from solutions by applying pressure to the solution when it is on one side of a selective membrane. The result is that the solute is retained on the pressurized side of the membrane and the pure solvent is allowed to pass to the other side. To be "selective," this membrane should not allow large molecules or ions through the pores (holes), but should allow smaller components of the solution (such as the solvent) to pass freely.

Microfiltration is fundamentally different from reverse osmosis and nanofiltration because those systems use pressure as a means of forcing water to go from low pressure to high pressure. Microfiltration can use a pressurized system but it does not need to include pressure.

Another example may use an aperture size of 0.2 micrometres. Also in this example the ceramic membrane filter 6 and pump are selected to cause 5000 litres of water per hour to be forced, or permeate, through the ceramic membrane at a surface rate of between 2 and 7 metres per second. In this specific example, the rate of 2.35 metres per second has been selected. In other examples this rate is not selected so precisely as +/- 0.05 metres per second. The ceramic membrane filter of this example is a type with hollow ceramic fibres, such as INOCEP™ ceramic hollow fiber membranes. A flow meter 9 after the ceramic membranes filter 6 measures the flow through the membrane. The apparatus has a permeate solenoid valve 24 connected to the flow meter 9 to control flow of the filtered water.

An Ultra Violet (UV) disinfection device 11 may be connected after (i.e. downstream of) the permeate solenoid valve 24. In examples configured to recycle 5000 litres per hour of water for commercial laundry use, the UV disinfection apparatus may have 2 or 4 1000mm amalgam lamps (not shown).
These lamps can generally tolerate water temperatures up to 90 degrees Celsius. Amalgam lamps also typically have a high operational lifetime, of up to 16000 hours. Additionally, amalgam lamps have been observed by the applicant to have a higher disinfection effectiveness than some alternative standard UV lamps.

In a further embodiment an activated carbon tank is connected to the UV disinfection apparatus 11. In the carbon tank, the permeate is in contact with coal-based steam activated carbon meshes in unwashed granular form. The meshes of this embodiment measure 12x40mm. The amount of carbon in the tank is chosen for the flow rate of the apparatus and the water quality required. The tank of this embodiment is configured to provide between 6 and 12 minutes of contact for the water with the activated carbon. Contact with the activated carbon absorbs non-ionic surfactants, odours and any other small contaminants that may be left in the permeate water after filtration by the ceramic membrane filter. Suitable dimensions and amounts of material as well as types of material for given specific applications will be apparent to the person of ordinary skill in the art.

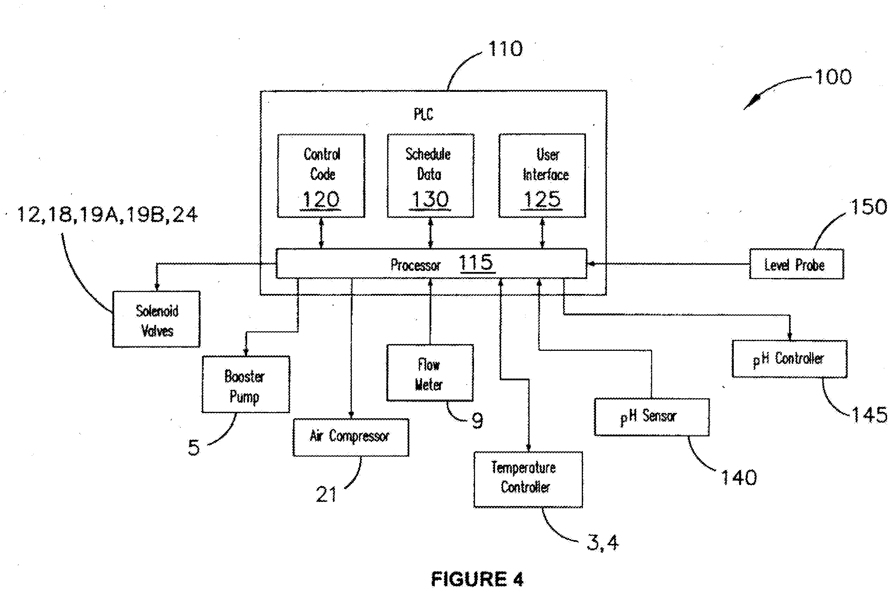

The water recycling apparatus 1 has a permeate (i.e. filtered and treated water) tank 15 connected to the UV disinfection apparatus 11 to store treated water, or permeate. The permeate tank 15 has a level probe 150 (Figure 4) which relays signals to a processor 115 of a controller 110 for the apparatus 1. The apparatus 1 may be controlled by a programmable logic controller (PLC) 110 which has a touch screen control interface 125, a display (not shown). A PLC is used in this context as just one example of a number of different computing devices that can be configured to control the operation of apparatus 1 as part of control system 100.

The apparatus 1 may have a pH controller 145 which doses permeate supplied from the tank with sulphuric acid (H₂SO₄) to neutralize alkalis in the raw water and maintain the permeate water at a pH of around 7. The pH controller 145 receives signals measured at intervals by a pH sensor probe 140 in the permeate tank 15.

The apparatus 1 has provisions for control of pH, temperature adjustment and the adjustment of total dissolved solids (TDS) through applicable mixing valves at any module 51, 52, 53, 54 and 55 or the press 56 of the tunnel washer 50. Therefore providing the flexibility to manipulate the mixture of recycled water and chemicals or fresh water and chemicals at any chamber or module of the continuous batch laundry system 50. This also includes all stages of operation relating to particular modules of the continuous batch laundry system 50. The only modules which are not able to be fed with the recycled water and chemical mixture is the main rinse chamber and sour/starch modules which are fed with fresh or town/city water.

A back-wash solenoid valve 18 connects the exit surfaces of the ceramic membranes in the vessels 7 and 8 to a back-wash tank and pump 20 via suitable fluid conduits 22. Here exit surface refers to the membrane surface which water exits from, or permeates from, when the water is forced through the ceramic membrane in a forward direction. If water is forced from the backwash tank and pump 20 against the exit surfaces, it will be forced through the ceramic membranes in a reverse direction relative to normal filtering operation. The backwash tank 20 is suitable for pressurizing when solenoid valves 19A and 19B are closed. An air compressor 21 is connected to the back-wash tank 20 to provide compressed air under the control of PLC 110 to pressurise the tank 20.

The back-wash tank and pump 20 is connected to the membrane vessels 7 and 8 by a conduit 22 which is smaller in diameter than the conduit which connects the membrane vessels 7 and 8 to the flow meter 9. For example, the back-wash conduit 22 may be 32mm in diameter, compared to 50mm diameter of the permeate conduit. This assists in maintaining backwash pressure provided by the compressor 21. The backwash tank and pump can be filled with permeate when the solenoid valves 19 are open. This provides a supply of relatively clean water at a temperature which is close enough to the temperature of water in membrane vessels 7 and 8 as to minimize thermal shock to the ceramic membranes in the vessels 7 and 8. The back-wash tank and pump 20 and back-wash piping 22 are configured so that back-wash water forced in a reverse direction through the ceramic membranes differs from the raw water being filtered by the ceramic membranes within a thermal shock tolerance for the ceramic membranes. In this case the thermal shock tolerance may be around 2 to 4 degrees Celsius.

The operation of the embodiment of the recycling apparatus 1 described with reference to Figure 1 will now be described with the apparatus 100 in a normal mode of operation in which it recycles raw water in the raw water tank 2. The apparatus 1 may be activated by signals at a level probe 150 in the permeate tank 15 indicating to the controller 110 that the permeate levels are low.

Raw water or water drained from pipes and valves 62, 63, 64, 65, 66 from the continuous batch laundry system 50 is transferred via pipe 61, and stored in the raw water tank 2, is heated and maintained at a temperature of 60 degrees by the Direct Steam Injection device 4. The raw water is then drawn from the tank by the booster pump 5 and through hollow ceramic fibre filters in the two ceramic filter vessels 7 and 8 in series at a transmembrane pressure (TMP) of less than 3.0 bar and at a rate at the membrane surface of 2.35 metres per second. Rather than being drawn from the raw water tank 2 transfer pump 30 may re-route the water which has not been filtered sufficiently from the ceramic filter vessels 7 and 8 back through the booster pump 5 to re-filter the raw water. Passing the raw water through the hollow ceramic fibre filter 6 removes particulates and contaminants to a size of greater than 40 nm.

The water (i.e. filtered water, sometime referred to herein as "permeate") permeated through the hollow ceramic membrane filter 6 passes through the flow meter 9 which monitors the flow rate. In some examples signals from the flow meter 9 may be used by the controller 110 to adjust the operation of the booster pump 5. Permeate then passes through a permeate solenoid valve 24 which is open when the apparatus is in this normal operating mode. Permeate then passes through the UV disinfection device 11 which disinfects the permeate water. Next the permeate enters the treated water tank 15. The treated water tank 15 may also include a chlorine dosing pump 31 to further disinfect the permeate.

Treated water or permeate can then be drawn from the treated water tank 15 via conduit 40 and into pipes 41, 42, 43, 44 and 45 associated with modules 51 , 52, 53, 54 or directly into entry chute 71 of the continuous batch laundry system 50. Fresh water 48 is also available and used in the final rinse in module 55. The fresh water may also include sour or starch added in the final rinse stages of the wash cycle.

In normal operation, the solenoid valve 18 connecting the backwash tank 20 to the hollow fibre ceramic filter vessels 7, 8 is closed, isolating water in the backwash tank 20 from the filter 6.

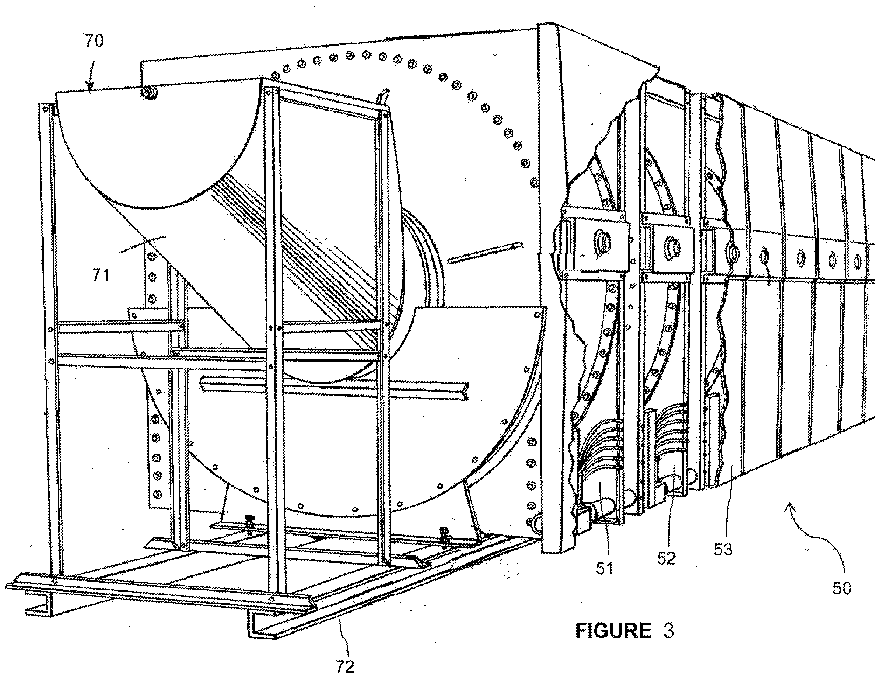

With reference to Figure 3, there is depicted a perspective view of a water treatments system comprising a continuous batch laundry system 50 of the present invention. As can be seen, system 50 includes a plurality of longitudinally aligned modules 51, 52, 53, 54 and 55 each of which houses a rotatably supported drum. Each drum includes two spaced end walls which each include a large opening to provide communication between adjacent drums. Inlet and outlet to each drum is accomplished through a cylindrical sleeve disposed on each end wall. As is typical in such systems, an inlet chute 71 is provided for receiving articles in the chute opening 70 of clothing or the like for laundering and after being fully loaded a load of laundry is present in each of the drums depicted. An outlet chute is provided for the removal of each load of laundry after it has completed its cycle through system 50. The continuous batch laundry system 50 is typically mounted on a frame 72 which supports both the modules 51, 52, 53, 54, 55 and the input chute 71.

Inlet chute 70 can provide a hopper 71 that enables the intake of textiles or fabric articles to be washed. Such fabric articles, textiles, goods to be washed can include clothing, linens, towels, and the like. An extractor (not shown) is positioned next to the outlet end portion of tunnel washer 50. Flow lines 41, 42, 43, 44, 45 are provided for adding water and/or chemicals to tunnel washer 50 at selected or desired locations. Chemicals can also be added to the modules through lines not shown. The chemicals separate the soil from the goods, linens or textiles and suspend the soil in the wash liquor which is able to be drained from the respective modules via valves and conduits 62, 63, 64, 65 and 66.

The water treatment system of the present invention comprises both a continuous batch laundry system 50 and the water treatment apparatus 1. As previously mentioned the continuous batch laundry system 50 or tunnel washer 50 is compactly mounted on a frame 72. In order to not make the footprint of the tunnel washer 50 any larger the water treatment apparatus 1 of the present invention has been designed to conveniently fit within the frame of the tunnel washer 50. Therefore all components of the water treatment apparatus 1 fit within the confines of the outer walls of the tunnel washer 50. Therefore making the water treatment apparatus 1 easy to retrofit to any tunnel washer design.

Alternatively the water treatment apparatus 1 may be an add on unit or stand-alone unit mounted externally of the continuous batch laundry system 50. For example, the water treatment apparatus 1 may be mounted on any side or on top of the continuous batch laundry system 50 and would therefore have connecting hoses or pipes connected to the respective modules of the tunnel washer 50.

Figure 4 shows a control system 100 having a controller in the exemplary form of PLC 110. The PLC 110 has memory including program code executable by a processor 115 of the PLC 110, where the program code comprises control code 120 to configure the PLC to perform the control functions described herein, schedule data to indicate a maintenance schedule by which the ceramic filter is to undergo its periodic self-cleaning purge, and a user interface module that cooperates with the touch screen (not shown) to provide user interface functionality.

Other examples provide a computer readable carrier medium carrying computer executable code, the code operable when executed to configure a configurable device to control a water treatment apparatus 1 to carry out methods desired herein. The configurable device may comprise Programmable Logic- Controller (PLC) 110. The carrier may include a data or information transmission medium such as telephonic transmission media, radio transmission medium, and include data or transmission formats including TCP/IP, telnet, FTP or other transmission formats known to the reader. The carrier medium may include data storage on which is stored the control code 120, user interface 125 and/or maintenance schedule data 130. The storage medium or media may include volatile or non-volatile memory, magnetic or optical media, EEPROM, or any other suitable storage media.

Some embodiments provide a water recycling system which provides high recycling yields for raw or grey water using ceramic membrane filters by heating the raw water to be filtered to take advantage of the applicant's observation that raised temperatures, particularly about 40 degrees Celsius or more, improve the effectiveness of ceramic membrane filters and/or allow these filters to provide effective filtration at more consistent flow rates.

Some examples (not according to the invention) provide efficient operation of recycling for industrial plant by using ceramic membrane filters and heating water to a temperature which balances i) a tendency observed by the applicant for filtering of water by ceramic membrane filters to have a higher efficiency and more consistent operation at higher temperature and ii) energy wastage if the water is heated above a temperature required by the industrial plant.

Some embodiments provide a water recycling system which provides high throughput and/or filter life by providing a reverse flow through the ceramic membrane filters to remove material deposited by the filtration action.

Some embodiments provide grey water recycling using ceramic membrane filters in combination with a vibrating screen filter or media filter.

Some embodiments provide grey water recycling using ceramic membrane filters in combination with a vibrating screen filter and a water heater to control the temperature of water filtered by the ceramic membrane filter to provide improved recycling rates. Other examples (not according to the invention) are adapted from the embodiments described herein to treat water that is not necessarily grey water. Other examples (not according to the invention) are adapted from the embodiments herein to treat liquids other than water.

### VARIATIONS

It will be realized that the foregoing has been given by way of illustrative example only and that other modifications and variations would be apparent to persons skilled in the art within the scope of the claims.

In the specification the term "comprising" shall be understood to have a broad meaning similar to the term "including" and will be understood to imply the inclusion of a stated integer or step or group of integers or steps but not the exclusion of any other integer or step or group of integers or steps. This definition also applies to variations on the term "comprising" such as "comprise" and "comprises".

## Claims

1. A water treatment system comprising:
a continuous batch laundry system (50) comprising a plurality of longitudinally aligned modules (51-55) having inlet means at one end for receiving articles to be laundered and a discharge means at the other end, each said module (51-55) including a rotatably supported drum within a housing, said drum being supported for oscillatory and rotary movement about a horizontal axis, wherein each drum includes spaced end walls, each end wall of each drum including a large opening to provide communication between adjacent drums, inlet flow lines (41-45) on each module (51-55) to allow chemicals and water into each module (51-55) and outlet flow lines (62-66) located on each module (51-55) for draining each module (51-55), and a driving means for inducing rotation and oscillation in at least a selected one of said drums;
a raw water tank (2) to receive the mixture of water and chemicals from the outlet flow lines (62-66);
a filtering apparatus connected between the outlet flow lines (62-66) and the inlet flow lines (41-45) of the continuous batch laundry system (50) to filter and reclaim a mixture of water and chemicals drained from each module (51-55), the filtering apparatus comprising:
a ceramic hollow fibre membrane filter (6);
a flow apparatus (5, 30) operable to pass the mixture of water and chemicals through the filter (6) in a forward direction so as to filter the water and chemicals;
a heater operatively able to heat the mixture in the raw water tank (2) that passes through the ceramic hollow fibre membrane filter (6); and
a temperature controller (4) operatively associated with the heater to control a temperature of the mixture within a preconfigured temperature range between 40 degrees Celsius and 90 degrees Celsius;
wherein the filtered and reclaimed mixture of water and chemicals is fed from the filtering apparatus and into a permeate tank (15);
wherein the permeate tank (15) is connected to the inlet flow lines (41-45) of each said module (51-55) of the continuous batch laundry system (50) to supply filtered water and chemicals as required; and
wherein the water treatment system further comprises means for control of pH, temperature adjustment and adjustment of total dissolved solids (TDS) by mixing the filtered and reclaimed mixture of water and chemicals from the permeate tank (15) with fresh water and chemicals through mixing valves at the modules (51-55) of the continuous batch laundry system (50), other than at a main rinse chamber and sour/starch modules which are fed with fresh or town/city water.

2. A water treatment system as claimed in claim 1, wherein the flow apparatus (5, 30) passes water through the filter (6) at a pressure between 1 and 3 bar and at a rate at the filter surface between 1 and 3 metres per second.

3. A water treatment system as claimed in claim 2, wherein the flow apparatus includes a forward-flow apparatus (5, 30) operable to provide the forward flow and a reverse-flow apparatus (20, 21) operable to provide the reverse flow.

4. A water treatment system as claimed in claim 3, wherein the reverse-flow apparatus (20, 21) includes a backwash pump (21) and tank (20) operable to receive filtered water from the filter (6) to provide water to the reverse-flow apparatus (20, 21).

5. A water treatment system as claimed in claim 4, wherein the back-wash pump and tank (20) are operable to be pressurised, and wherein a backwash conduit (22) is connected to the filter (6) such that when the backwash tank (20) is pressurised, water from the backwash tank (20) is provided to the filter (6) in the reverse direction.

6. A water treatment system as claimed in any one of the preceding claims, wherein the ceramic hollow fibre membrane filter (6) is adapted to provide both microfiltration and ultrafiltration.

7. A water treatment system as claimed in any one of the preceding claims, further comprising a preliminary filter to filter water prior to it being passed through the ceramic hollow fibre membrane filter (6), the preliminary filter comprising a vibrating membrane; and/or further comprising a carbon filter downstream of the ceramic hollow fibre membrane filter (6); and/or further comprising a UV treatment apparatus (11) downstream of the ceramic hollow fibre membrane filter (6) to treat water with Ultra Violet light to disinfect the water.

8. A water treatment system as claimed in any one of the preceding claims, further comprising a pH adjustment apparatus (145) operable to adjust the pH level of filtered water.

9. A water treatment system as claimed in claim 8, wherein the pH adjustment apparatus (145) is operable to maintain the pH level between 6 and 8.

10. A water treatment system as claimed in any one of the preceding claims, wherein the continuous batch laundry system (50) is a continuous batch tunnel washer.

11. A process to treat a mixture of water and chemicals including:
providing water treatment system comprising a continuous batch laundry system (50) as claimed in claim 1;
operating the filtering apparatus comprising the ceramic hollow fibre membrane filter (6) to filter and reclaim the mixture of water and chemicals drained from each module (51-55);
operating the flow apparatus (5, 30) to pass the mixture through the ceramic hollow fibre membrane filter (6) in a forward direction so as to filter the mixture;
operating the heater to heat the mixture in the raw water tank (2) that passes through the ceramic hollow fibre membrane filter (6);
operating the temperature controller (4) to control the temperature of the mixture within a preconfigured temperature range between 40 degrees Celsius and 90 degrees Celsius prior to passing the mixture through the ceramic hollow fibre membrane filter (6); and
operating the means for control of pH, temperature adjustment and adjustment of total dissolved solids (TDS) by mixing the filtered and reclaimed mixture of water and chemicals from the permeate tank (15) with fresh water and chemicals through mixing valves at the modules (51-55) of the continuous batch laundry system (50), other than at a main rinse chamber and sour/starch modules which are fed with fresh or town/city water.

## Patentansprüche

1. Wasseraufbereitungssystem, umfassend:
ein kontinuierliches Chargenwäschesystem (50), umfassend eine Vielzahl von längs ausgerichteten Modulen (51-55), die Einlassmittel an einem Ende zum Aufnehmen von zu waschenden Artikeln und ein Auslassmittel an dem anderen Ende aufweisen, wobei jedes Modul (51-55) eine drehbar gestützte Trommel innerhalb eines Gehäuses beinhaltet, wobei die Trommel für oszillierende und drehende Bewegung um eine horizontale Achse gestützt wird, wobei jede Trommel beabstandete Endwände beinhaltet, wobei jede Endwand jeder Trommel eine große Öffnung beinhaltet, um Kommunikation zwischen benachbarten Trommeln bereitzustellen, Einlassströmungsleitungen (41-45) an jedem Modul (51-55), um Chemikalien und Wasser in jedes Modul (51-55) einzulassen und Auslassströmungsleitungen (62-66), die sich an jedem Modul (51-55) befinden, um jedes Modul (51-55) zu entleeren, und ein Antriebsmittel, um Drehung und Oszillation in zumindest einer ausgewählten der Trommeln zu induzieren;
einen Rohwassertank (2) zum Aufnehmen der Mischung aus Wasser und Chemikalien aus den Auslassströmungsleitungen (62-66);
eine Filtervorrichtung, die zwischen den Auslassströmungsleitungen (62-66) und den Einlassströmungsleitungen (41-45) des kontinuierlichen Chargenwäschesystems (50) verbunden ist, um eine Mischung aus Wasser und Chemikalien, die aus jedem Modul (51-55) entleert wurde, zu filtern und zurückzugewinnen, wobei die Filtervorrichtung Folgendes umfasst:
einen keramischen Hohlfasermembranfilter (6);
eine Strömungsvorrichtung (5, 30), die betreibbar ist, um die Mischung aus Wasser und Chemikalien durch den Filter (6) in einer Vorwärtsrichtung zu leiten, um das Wasser und die Chemikalien zu filtern;
eine Heizung, die operativ dazu in der Lage ist, die Mischung in dem Rohwassertank (2), die den keramischen Hohlfasermembranfilter (6) durchläuft, zu erwärmen; und
eine Temperatursteuerung (4), die operativ mit der Heizung verbunden ist, um eine Temperatur der Mischung innerhalb eines vorkonfigurierten Temperaturbereichs zwischen 40 Grad Celsius und 90 Grad Celsius zu steuern;
wobei die gefilterte und zurückgewonnene Mischung aus Wasser und Chemikalien aus der Filtervorrichtung und in einen Permeattank (15) eingespeist wird;
wobei der Permeattank (15) mit den Einlassströmungsleitungen (41-45) jedes Moduls (51-55) des kontinuierlichen Chargenwäschesystems (50) verbunden ist, um gefiltertes Wasser und Chemikalien nach Bedarf zu liefern; und
wobei das Wasseraufbereitungssystem ferner Mittel zur Steuerung des pH-Wertes, zur Temperatureinstellung und zur Einstellung der gesamten gelösten Feststoffe (TDS) umfasst, indem die gefilterte und zurückgewonnene Mischung aus Wasser und Chemikalien aus dem Permeattank (15) mit Frischwasser und Chemikalien durch Mischventile an den Modulen (51-55) des kontinuierlichen Chargenwäschesystems (50) gemischt wird, außer an einer Hauptspülkammer und an Sauer-/Stärkemodulen, die mit Frisch- oder Stadtwasser gespeist werden.

2. Wasseraufbereitungssystem nach Anspruch 1, wobei die Strömungsvorrichtung (5, 30) Wasser durch den Filter (6) bei einem Druck zwischen 1 und 3 bar und bei einer Rate an der Filteroberfläche zwischen 1 und 3 Metern pro Sekunde leitet.

3. Wasseraufbereitungssystem nach Anspruch 2, wobei die Strömungsvorrichtung eine Vorwärtsströmungsvorrichtung (5, 30), die betreibbar ist, um die Vorwärtsströmung bereitzustellen, und eine Rückwärtsströmungsvorrichtung (20, 21) beinhaltet, die betreibbar ist, um die Rückwärtsströmung bereitzustellen.

4. Wasseraufbereitungssystem nach Anspruch 3, wobei die Rückwärtsströmungsvorrichtung (20, 21) eine Rückspülpumpe (21) und einen Tank (20) beinhaltet, die betreibbar sind, um gefiltertes Wasser von dem Filter (6) aufnehmen, um der Rückwärtsströmungsvorrichtung (20, 21) Wasser bereitzustellen.

5. Wasseraufbereitungssystem nach Anspruch 4, wobei die Rückspülpumpe und der Tank (20) betreibbar sind, um unter Druck gesetzt zu werden, und wobei eine Rückspülleitung (22) mit dem Filter (6) verbunden ist, sodass, wenn der Rückspültank (20) unter Druck gesetzt wird, Wasser aus dem Rückspültank (20) dem Filter (6) in der Rückwärtsrichtung bereitgestellt wird.

6. Wasseraufbereitungssystem nach einem der vorhergehenden Ansprüche, wobei der keramische Hohlfasermembranfilter (6) ausgelegt ist, um sowohl Mikrofiltration als auch Ultrafiltration bereitzustellen.

7. Wasseraufbereitungssystem nach einem der vorhergehenden Ansprüche, ferner umfassend einen Vorfilter zum Filtern von Wasser, bevor es durch den keramischen Hohlfasermembranfilter (6) geleitet wird, wobei der Vorfilter eine Vibrationsmembran umfasst; und/oder ferner umfassend einen Kohlefilter stromabwärts des keramischen Hohlfasermembranfilters (6); und/oder ferner umfassend eine UV-Behandlungsvorrichtung (11) stromabwärts des keramischen Hohlfasermembranfilters (6), um Wasser mit ultraviolettem Licht zu behandeln, um das Wasser zu desinfizieren.

8. Wasseraufbereitungssystem nach einem der vorhergehenden Ansprüche, ferner umfassend eine pH-Einstellvorrichtung (145), die betreibbar ist, um den pH-Wert von gefiltertem Wasser einzustellen.

9. Wasseraufbereitungssystem nach Anspruch 8, wobei die pH-Einstellvorrichtung (145) betreibbar ist, um den pH-Wert zwischen 6 und 8 zu halten.

10. Wasseraufbereitungssystem nach einem der vorhergehenden Ansprüche, wobei das kontinuierliche Chargenwäschesystem (50) eine kontinuierliche Chargentunnelwaschanlage ist.

11. Verfahren zum Aufbereiten einer Mischung aus Wasser und Chemikalien, beinhaltend:
Bereitstellen eines Wasseraufbereitungssystems, das ein kontinuierliches Chargenwäschesystem (50) umfasst, nach Anspruch 1;
Betreiben der Filtervorrichtung, die den keramischen Hohlfasermembranfilter (6) umfasst, um die aus jedem Modul (51-55) entleerte Mischung aus Wasser und Chemikalien zu filtern und zurückzugewinnen;
Betreiben der Strömungsvorrichtung (5, 30), um die Mischung durch den keramischen Hohlfasermembranfilter (6) in einer Vorwärtsrichtung zu leiten, um die Mischung zu filtern;
Betreiben der Heizung, um die Mischung in dem Rohwassertank (2), die den keramischen Hohlfasermembranfilter (6) durchläuft, zu erwärmen;
Betreiben der Temperatursteuerung (4), um die Temperatur der Mischung innerhalb eines vorkonfigurierten Temperaturbereichs zwischen 40 Grad Celsius und 90 Grad Celsius zu steuern, bevor die Mischung durch den keramischen Hohlfasermembranfilter (6) geleitet wird; und
Betreiben der Mittel zur Steuerung des pH-Wertes, zur Temperatureinstellung und zur Einstellung der gesamten gelösten Feststoffe (TDS) durch Mischen der gefilterten und zurückgewonnenen Mischung aus Wasser und Chemikalien aus dem Permeattank (15) mit Frischwasser und Chemikalien durch Mischventile an den Modulen (51-55) des kontinuierlichen Chargenwäschesystems (50), außer in einer Hauptspülkammer und Sauer-/Stärkemodulen, die mit Frisch- oder Stadtwasser gespeist werden.

## Revendications

1. Système de traitement de l'eau comprenant :
un système de lavage par lot de type continu (50) comprenant une pluralité de modules alignés longitudinalement (51-55) possédant un moyen d'entrée au niveau d'une extrémité destinée à recevoir des articles à laver et un moyen de décharge au niveau de l'autre extrémité, chaque module (51-55) comprenant un tambour supporté de manière rotative dans un boîtier, ledit tambour étant supporté pour effectuer un mouvement oscillatoire et rotatif autour d'un axe horizontal, chaque tambour comprenant des parois d'extrémité espacées, chaque paroi d'extrémité de chaque tambour comprenant une grande ouverture pour fournir une communication entre des tambours adjacents, des conduites de flux d'entrée (41-45) sur chaque module (51-55) pour permettre aux produits chimiques et à l'eau d'entrer dans chaque module (51-55) et des conduites de flux de sortie (62-66) situées sur chaque module (51-55) pour drainer chaque module (51-55), et un moyen d'entraînement destiné à induire une rotation et une oscillation dans au moins un tambour sélectionné parmi lesdits tambours ;
un réservoir d'eau brute (2) pour recevoir le mélange d'eau et de produits chimiques provenant des conduites de flux de sortie (62-66) ;
un appareil de filtrage raccordé entre les conduites de flux de sortie (62-66) et les conduites de flux d'entrée (41-45) du système de lavage par lot de type continu (50) pour filtrer et récupérer un mélange d'eau et de produits chimiques drainé de chaque module (51- 55), l'appareil de filtrage comprenant :
un filtre à membrane à fibres creuses en céramique (6) ;
un appareil de flux (5, 30) servant à faire passer le mélange d'eau et de produits chimiques à travers le filtre (6) dans une direction vers l'avant de façon à filtrer l'eau et les produits chimiques ;
un appareil de chauffage capable de chauffer fonctionnellement le mélange dans le réservoir d'eau brute (2) qui passe à travers le filtre à membrane à fibres creuses en céramique (6) ; et
un dispositif de régulation de température (4) associé fonctionnellement au dispositif de chauffage pour réguler une température du mélange dans une plage de températures préconfigurée comprise entre 40 degrés Celsius et 90 degrés Celsius ;
ledit mélange filtré et récupéré d'eau et de produits chimiques étant distribué en provenance de l'appareil de filtrage et dans un réservoir de perméat (15) ;
ledit réservoir de perméat (15) étant raccordé aux conduites de flux d'entrée (41-45) de chaque module (51-55) du système de lavage par lot de type continu (50) pour fournir de l'eau filtrée et des produits chimiques selon les besoins ; et
ledit système de traitement de l'eau comprenant en outre un moyen pour la régulation du pH, le réglage de la température et le réglage des solides dissous totaux (TDS) en mélangeant le mélange filtré et récupéré d'eau et de produits chimiques provenant du réservoir de perméat (15) avec de l'eau fraîche et des produits chimiques à travers des soupapes de mélange au niveau des modules (51-55) du système de lavage par lot de type continu (50), autres qu'au niveau d'une chambre de rinçage principale et des modules acide/amidon qui sont alimentés en eau fraîche ou de ville/métropole.

2. Système de traitement de l'eau selon la revendication 1, ledit appareil de flux (5, 30) faisant passer de l'eau à travers le filtre (6) à une pression comprise entre 1 et 3 bars et à un débit au niveau de la surface de filtre compris entre 1 et 3 mètres par seconde.

3. Système de traitement de l'eau selon la revendication 2, ledit appareil de flux comprenant un appareil de flux aller (5, 30) servant à fournir le flux aller et un appareil de flux retour (20, 21) servant à fournir le flux retour.

4. Système de traitement de l'eau selon la revendication 3, ledit appareil de flux retour (20, 21) comprenant une pompe de lavage à contre-courant (21) et un réservoir (20) servant à recevoir de l'eau filtrée en provenance du filtre (6) pour fournir de l'eau à l'appareil de flux retour (20, 21).

5. Système de traitement de l'eau selon la revendication 4, ladite pompe de lavage à contre-courant et ledit réservoir (20) pouvant fonctionner pour être mis sous pression, et un conduit de lavage à contre-courant (22) étant raccordé au filtre (6) de sorte que lorsque le réservoir de lavage à contre-courant (20) est sous pression, l'eau provenant du réservoir de lavage à contre-courant (20) soit fournie au filtre (6) dans le sens retour.

6. Système de traitement de l'eau selon l'une quelconque des revendications précédentes, ledit filtre à membrane à fibres creuses en céramique (6) étant adapté pour fournir à la fois une micro filtration et une ultrafiltration.

7. Système de traitement de l'eau selon l'une quelconque des revendications précédentes, comprenant en outre un filtre préliminaire pour filtrer l'eau avant qu'elle ne passe à travers le filtre à membrane à fibres creuses en céramique (6), le filtre préliminaire comprenant une membrane vibrante ; et/ou comprenant en outre un filtre à charbon en aval du filtre à membrane à fibres creuses en céramique (6) ; et/ou comprenant en outre un appareil de traitement UV (11) en aval du filtre à membrane à fibres creuses en céramique (6) pour traiter l'eau avec une lumière ultraviolette afin de désinfecter l'eau.

8. Système de traitement de l'eau selon l'une quelconque des revendications précédentes, comprenant en outre un appareil de réglage de pH (145) servant à régler le niveau de pH de l'eau filtrée.

9. Système de traitement de l'eau selon la revendication 8, ledit appareil de réglage de pH (145) servant à maintenir le niveau de pH entre 6 et 8.

10. Système de traitement de l'eau selon l'une quelconque des revendications précédentes, ledit système de lavage par lot de type continu (50) étant un dispositif de lavage à tunnel par lot de type continu.

11. Procédé pour traiter un mélange d'eau et de produits chimiques comprenant :
la fourniture d'un système de traitement de l'eau comprenant un système de lavage par lot de type continu (50) selon la revendication 1 ;
l'actionnement de l'appareil de filtrage comprenant le filtre à membrane à fibres creuses en céramique (6) pour filtrer et récupérer le mélange d'eau et de produits chimiques drainé de chaque module (51-55) ;
l'actionnement de l'appareil de flux (5, 30) pour faire passer le mélange à travers le filtre à membrane à fibres creuses en céramique (6) dans une direction vers l'avant afin de filtrer le mélange ;
l'actionnement du dispositif de chauffage pour chauffer le mélange dans le réservoir d'eau brute (2) qui passe à travers le filtre à membrane à fibres creuses en céramique (6) ;
le fonctionnement du dispositif de régulation de température (4) pour réguler la température du mélange dans une plage de température préconfigurée comprise entre 40 degrés Celsius et 90 degrés Celsius avant de faire passer le mélange à travers le filtre à membrane à fibres creuses en céramique (6) ; et
l'actionnement du moyen de régulation de pH, de réglage de température et de réglage de solides dissous totaux (TDS) en mélangeant le mélange filtré et récupéré d'eau et de produits chimiques provenant du réservoir de perméat (15) avec de l'eau fraîche et des produits chimiques à travers des soupapes de mélange au niveau des modules (51-55) du système de lavage par lot de type continu (50), autre qu'au niveau d'une chambre de rinçage principale et des modules acides/amidon qui sont alimentés en eau fraîche ou de ville/métropole.
